# EUROPEAN PATENT APPLICATION

(11) **EP 3 345 701 A1**
(43) Date of publication of application: **11.07.2018**
(21) Application number: 16841621.2
(22) Date of filing: 24.08.2016
(51) Int. Cl.: B22F 9/26, C22B 1/16, C22B 3/08, C22B 3/44, C22B 23/00

(54) **PROCESS FOR PRODUCING NICKEL POWDER**

(30) Priority: 31.08.2015 JP 2015170115; 23.02.2016 JP 2016032519; 19.05.2016 JP 2016100070
(71) Applicant: Sumitomo Metal Mining Co., Ltd., Tokyo 105-8716 (JP)
(72) Inventor: OZAKI Yoshitomo, Niihama-shi Ehime 792-0002 (JP); HEGURI Shin-ichi, Niihama-shi Ehime 792-0002 (JP)
(74) Representative: Barker Brettell LLP
(86) International application number: PCT/JP2016/074694
(87) International publication number: WO 2017/038589

(57) **Abstract**

Provided is a method for producing coarse particles of so-called high purity nickel powder containing a small amount of impurities and particularly having a low sulfur content from a nickel ammine sulfate complex solution using fine nickel powder. The method for producing nickel powder from a nickel sulfate solution includes the treatment steps of: (1) a hydroxylation step of producing a precipitate of nickel hydroxide; (2) a complexing step of forming a mixture slurry containing a nickel ammine sulfate complex solution, seed crystals, and the nickel hydroxide; (3) a reduction step of forming a reduced slurry containing the nickel powder formed by precipitation of a nickel component on the seed crystals: and (4) a solid-liquid separation step of subjecting the reduced slurry formed in the reduction step (3) to solid-liquid separation to separately recover the nickel powder and a post-reduction solution.

## Description

### Technical Field

The present invention relates to a method for obtaining high purity nickel powder having a low sulfur content from a nickel ammine sulfate complex solution and briquettes prepared by pressing the powder.

Particularly, the present invention can be applied to the treatment of an in-process intermediate solution generated from a nickel hydrometallurgical process.

### Background Art

A method for industrially producing nickel powder using a hydrometallurgical process includes a method for producing nickel powder by dissolving a raw material in a sulfuric acid solution followed by removing impurities to obtain a nickel sulfate solution, adding ammonia to the resulting nickel sulfate solution to form an ammine complex of nickel, and feeding hydrogen gas into the produced nickel ammine sulfate complex solution to reduce nickel.

For example, Non Patent Literature 1 describes a process for producing nickel powder by adding an iron compound as seed crystals during the reduction reaction to precipitate nickel on the iron compound, but the process is problematic in that iron derived from the seed crystals is mixed into the product.

Further, a method for obtaining nickel powder using a reducing agent other than hydrogen gas has also been proposed.

For example, Patent Literature 1 discloses nickel powder which is inexpensive, is excellent in weatherability, has low electric resistance in a state where it is kneaded with a resin, reduces initial electric resistance and electric resistance in use, can be stably used over a long period of time, and is suitable as conductive particles for a conductive paste and a conductive resin, and a method for producing the same.

The nickel powder disclosed in Patent Literature 1 contains 1 to 20% by mass of cobalt with the balance consisting of nickel and unavoidable impurities, includes secondary particles in which primary particles are aggregated, and has an oxygen content of 0.8% by mass or less. Cobalt is contained only in the surface layer part of the secondary particles, and it is said that the cobalt content in the surface layer part is preferably 1 to 40% by mass. When the nickel powder is intended to be obtained by the disclosed production method, cobalt will coexist. Therefore, the method is not suitable for an application in which nickel and cobalt are present in combination, for example, in a nickel oxide ore; these metals are separated; and each metal is intended to be economically recovered as high purity metal.

Further, Patent Literature 2 provides a method for producing metal powder by a liquid phase reduction method that is improved so that a particle aggregate may be hardly produced.

The method for producing metal powder includes a first step of dissolving a metal compound, a reducing agent, a complexing agent, and a dispersant to prepare an aqueous solution containing metal ions derived from the metal compound and a second step of adjusting the pH of the aqueous solution to reduce the metal ions with the reducing agent to precipitate the metal powder.

However, this production method requires high cost since an expensive chemical is used, and is not economically advantageous for applying the method to a process operated on a large scale as the above nickel smelting.

Although various processes for producing nickel powder have been proposed as described above, a method for producing high purity nickel powder using industrially inexpensive hydrogen gas has not been proposed.

### Citation List

### Patent Literature

Patent Literature 1: Japanese Patent Laid-Open No. 2005-240164
Patent Literature 2: Japanese Patent Laid-Open No. 2010-242143

### Non Patent Literature

Non Patent Literature 1: POWDER METALLURGY, 1958, No.1/2, pp.40-52.

### Summary of Invention

### Technical Problem

In these circumstances, the present invention intends to provide a method for producing coarse particles of so-called high purity nickel powder containing a smaller amount of impurities and particularly having a low sulfur content from a nickel ammine sulfate complex solution using industrially inexpensive hydrogen gas and using fine nickel powder.

### Solution to Problem

The first aspect of the present invention to solve the above problem is a method for producing nickel powder from a nickel sulfate solution, including the following process steps (1) to (4):
(1) a hydroxylation step of adding an alkali to the nickel sulfate solution to produce a precipitate of nickel hydroxide;
(2) a complexing step of adding a post-reduction solution obtained in a solid-liquid separation step (4) and nickel powder as seed crystals to the precipitate of nickel hydroxide produced in the hydroxylation step (1), and dissolving the precipitate of nickel hydroxide, to form a mixture slurry containing a nickel ammine sulfate complex solution, seed crystals, and nickel hydroxide;
(3) a reduction step of blowing hydrogen gas into the mixture slurry formed in the complexing step (2) to form a reduced slurry containing nickel powder formed by precipitation of a nickel component in the mixture slurry on the seed crystals; and
(4) the solid-liquid separation step of subjecting the reduced slurry formed in the reduction step (3) to solid-liquid separation to separately recover the nickel powder and a post-reduction solution, repeatedly subjecting the recovered nickel powder to either or both of the complexing step (2) and the reduction step (3), and repeatedly subjecting the recovered post-reduction solution to the complexing step (2).

The second aspect of the present invention is a method for producing nickel powder according to the first aspect, wherein repeated operation of sieving the nickel powder recovered in the solid-liquid separation step (4) by particle size, and adding a nickel powder having particles smaller than a predetermined size as seed crystals to either or both of the complexing step (2) and the reduction step (3) provides a nickel powder coarser than the nickel powder of seed crystals.

The third aspect of the present invention is a method for producing nickel powder according to the second aspect, wherein seed crystals to be added to either or both of the complexing step (2) and the reduction step (3) have an average particle size of 0.1 to 100 µm.

The fourth aspect of the present invention is a method for producing nickel powder according to the first to the third aspects, wherein, in the complexing step (2), when the mixture slurry containing the nickel ammine sulfate complex solution, the seed crystals, and nickel hydroxide is formed, a dispersant is further added to the mixture slurry.

The fifth aspect of the present invention is a method for producing nickel powder according to the first to the fourth aspects, wherein, in the complexing step (2), the amount of the seed crystals added is 1 to 100% based on the weight of nickel in the nickel ammine sulfate complex solution.

The sixth aspect of the present invention is a method for producing nickel powder according to the first to the fifth aspects, wherein the reduced slurry is sieved, and the undersize nickel powder and the undersize reduced slurry of the resulting post-reduction solution are repeatedly used as parts of the nickel powder as seed crystals and the post-reduction solution in the complexing step (2).

The seventh aspect of the present invention is a method for producing nickel powder according to the sixth aspect, wherein the complexing step (2) is composed of two steps: a dissolution step of adding the post-reduction solution to obtain the nickel ammine sulfate complex solution: and a seed crystal addition step of adding the mixture slurry containing either nickel powder or nickel powder and the post-reduction solution.

The eighth aspect of the present invention is a method for producing nickel powder according to the first aspect, wherein the nickel sulfate solution is obtained by dissolving, in a sulfuric acid solution, at least one of nickel and cobalt mixed sulfide, nickel sulfide, coarse nickel sulfate, nickel oxide, nickel hydroxide, nickel carbonate, and metallic nickel powder which is recovered by leaching a nickel oxide ore.

The ninth aspect of the present invention is a method for producing nickel powder according to the first aspect, wherein the nickel sulfate solution is obtained by: a leaching step of dissolving a nickel-containing material having cobalt as an impurity; and a solvent extraction step of adjusting pH of the leachate containing nickel and cobalt obtained in the leaching step and then separating the leachate into a nickel sulfate solution and a cobalt-recovering solution by solvent extraction.

A tenth aspect of the present invention is a method for producing nickel powder according to the first aspect, wherein the concentration of ammonium sulfate in the nickel ammine sulfate complex solution is 100 to 500 g/L, and the ammonium concentration is 1.9 or more in a molar ratio based on the nickel concentration in the nickel ammine sulfate complex solution.

The eleventh aspect of the present invention is a method for producing nickel powder according to the first aspect, wherein in the reduction step (3) hydrogen gas is blown while maintaining the temperature in the range of 100 to 200°C and the pressure in the range of 0.8 to 4.0 MPa.

The twelfth aspect of the present invention is a method for producing nickel powder according to the fourth aspect, wherein the dispersant contains a polyacrylate salt.

A thirteenth aspect of the present invention is a method for producing nickel powder according to the first aspect, including: a nickel powder briquetting step of processing the nickel powder obtained in the reduction step (3) into nickel briquettes in a block form using a briquetting machine; and a briquette sintering step of subjecting the resulting nickel briquettes in the block form to sintering treatment under holding conditions at a temperature of 500 to 1200°C in a hydrogen atmosphere to form nickel briquettes as a sintered compact.

The fourteenth aspect of the present invention is a method for producing nickel powder according to the first aspect, including an ammonium sulfate recovery step of concentrating the post-reduction solution from the solid-liquid separation step (4) to crystallize ammonium sulfate and recovering ammonium sulfate crystals.

The fifteenth aspect of the present invention is a method for producing nickel powder according to the first aspect, including an ammonia recovery step of adding an alkali to the post-reduction solution from the solid-liquid separation step (4), heating the resulting mixture to volatilize ammonia gas and recovering the ammonia gas.

### Advantageous Effect of Invention

According to the present invention, in a method for producing nickel powder using hydrogen gas from a nickel ammine sulfate complex solution, high purity nickel powder containing a smaller amount of impurities can be easily obtained and an industrially remarkable effect can be thus achieved.

### Brief Description of Drawing

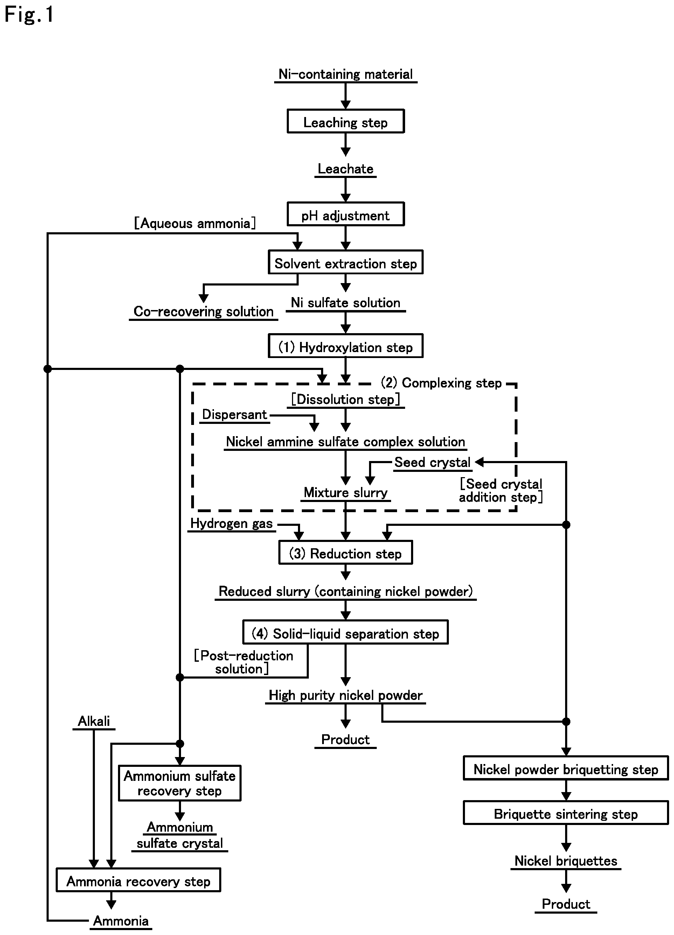

[Figure 1] Figure 1 is a production flow chart of nickel powder according to the present invention.

### Description of Embodiments

The present invention is characterized in that high purity nickel powder containing a smaller amount of impurities is produced from a nickel ammine sulfate complex solution by subjecting a process solution of the hydrometallurgical process to steps (1) to (4) as shown below, in the method for obtaining nickel powder from a nickel ammine sulfate complex solution.

Hereinafter, the method for producing high purity nickel powder according to the present invention will be described with reference to the production flow chart of high purity nickel powder according to the present invention shown in Figure 1.

### [Leaching Step]

First, the leaching step is a step of dissolving a nickel-containing material, serving as a starting material, such as an industrial intermediate including one or a mixture of two or more selected from nickel and cobalt mixed sulfide, crude nickel sulfate, nickel oxide, nickel hydroxide, nickel carbonate, nickel powder, and the like with sulfuric acid to leach nickel to produce a leachate (sulfuric acid solution containing nickel), and is performed by a known method, for example, disclosed in Japanese Patent Laid-Open No. 2005-350766.

### [Solvent Extraction Step]

Next, the pH of the leachate is adjusted, and the resulting leachate is subjected to the solvent extraction step.

This step is a step of bringing an organic phase into contact with the leachate, which is obtained in the leaching step and then subjected to pH adjustment, to exchange the components in each phase, thereby increasing the concentration of some components and reducing the concentration of other different components in an aqueous phase.

In the present invention, 2-ethylhexylphosphonic acid mono-2-ethylhexyl ester or di-(2,4,4-trimethylpentyl)phosphinic acid is used as the organic phase to selectively extract impurity elements, particularly cobalt, in the leachate as a cobalt recovering solution to obtain a nickel sulfate solution having a low cobalt concentration.

In addition, aqueous ammonia produced in the ammonia recovery step to be described below can be also used as the aqueous ammonia used for pH adjustment during this step.

### (1) Hydroxylation Step

In the present invention, an alkali is added to a nickel sulfate solution obtained through the above steps to produce a precipitate of nickel hydroxide, thereby separating a precipitate of the solid component from the liquid component.

As a result of this treatment, most impurities contained in nickel sulfate are separated into the liquid component, so that the concentration of impurities contained in the precipitate of nickel hydroxide as the solid component can be decreased.

As an alkali to be added here, sodium hydroxide, calcium hydroxide, or the like that can be industrially inexpensively obtained in large amounts is preferably used.

### (2) Complexing Step

The complexing step is composed of two steps, specifically a dissolution step and a seed crystal addition step, wherein first, in the dissolution step, ammonia in the form of a post-reduction solution obtained by subjecting the reduced slurry obtained in the reduction step (3) to solid-liquid separation is added to the precipitate of nickel hydroxide obtained in the hydroxylation step (1), so as to form a mixed solution of nickel hydroxide and the post-reduction solution, thereby complexing treatment is performed to produce a nickel ammine sulfate complex which is an ammine complex of nickel, and thus a nickel ammine sulfate complex solution thereof is formed.

At this time, the ammonium concentration can be adjusted by adding ammonia gas or aqueous ammonia. The ammonia is added so that the ammonium concentration at that time may be 1.9 or more in a molar ratio based on the concentration of nickel in the solution. If the ammonium concentration of the ammonia to be added is less than 1.9, nickel will not form an ammine complex, but a precipitate of nickel hydroxide will be produced.

Further, in order to adjust the concentration of ammonium sulfate, ammonium sulfate can be added in this step.

The concentration of ammonium sulfate at this time is preferably 100 to 500 g/L. If the concentration is 500 g/L or more, solubility will be exceeded to precipitate crystals, and it is difficult to achieve a concentration of less than 100 g/L in terms of the metal balance in the process.

Further, the ammonia gas or aqueous ammonia produced in the ammonia recovery step to be described below can be also used as the ammonia gas or aqueous ammonia used in this step.

Subsequent to the dissolution step, a seed crystal addition step is performed by adding the nickel powder having an average particle size of 0.1 to 5 µm as seed crystals in the form of a nickel powder slurry to the produced nickel ammine sulfate complex solution, so as to form a mixture slurry containing the seed crystals, the nickel ammine sulfate complex solution, and nickel hydroxide.

The weight of the seed crystals added at this time is preferably 1 to 100% based on the weight of nickel in the nickel ammine sulfate complex solution. If the weight of the seed crystals is less than 1%, the reaction efficiency during the reduction in the next step will be significantly reduced. Further, if the weight of the seed crystals is 100% or more, the amount of the seed crystals used will be a large amount, which requires much cost for producing seed crystals and is not economical.

Further, a dispersant may be added at the same time. Since the seed crystals are dispersed by adding the dispersant, the efficiency of the subsequent reduction step can be increased.

The dispersant used here is not particularly limited as long as it has a sulfonate, but a lignosulfonate is preferred as a dispersant that can be industrially inexpensively obtained.

### (3) Reduction Step

The reduction step is a step of forming a reduced slurry containing nickel powder that is formed by blowing hydrogen gas into the obtained mixture slurry to reduce and precipitate a nickel component in the solution on the seed crystals.

At this time, reaction temperature is preferably 100 to 200°C. If the temperature is lower than 100°C, and more preferably lower than 150°C, reduction efficiency will be reduced, and even if the temperature is 200°C or higher, there will be no influence on the reaction, and the loss of thermal energy and the like will increase.

Further, the pressure during the reaction is preferably 0.8 to 4.0 MPa. If the pressure is less than 0.8 MPa, reaction efficiency will be reduced, and even if the pressure exceeds 4.0 MPa, there will be no influence on the reaction, and the loss of hydrogen gas will increase.

In the liquid of the resulting mixture slurry, magnesium ions, sodium ions, calcium ions, sulfate ions, and ammonium ions are mainly present as impurities, but since all the ions remain in the solution, high purity nickel powder can be produced.

Further, nickel hydroxide in the liquid of the mixture slurry reacts with ammonium ions produced by reduction reaction, is dissolved as a nickel ammine complex in the solution, reacts with hydrogen gas, and is thus reduced, so that nickel is precipitated on the seed crystals.

### (4) Solid-liquid Separation Step

The reduced slurry produced in the previous reduction step (3) is subjected to solid-liquid separation, thereby separately recovering high purity nickel powder containing a small amount of impurities and a post-reduction solution. The high purity nickel powder is repeatedly fed to either or both of the complexing step (2) as seed crystals and the reduction step (3) as nickel powder to be subjected to particle growth.

Meanwhile, in this step, the recovered post-reduction solution is repeatedly used as a substitute for aqueous ammonia in the complexing step (2).

Specifically, the recovered high purity nickel powder containing a small amount of impurities and having a small size or the same pulverized to have a smaller size is repeatedly fed as seed crystals to the complexing step (2). The nickel powder is further added to a nickel ammine sulfate complex solution obtained in the complexing step (2). Hydrogen gas is then fed in the reduction step (3) to reduce and precipitate nickel on the high purity nickel powder, so as to be able to grow particles.

Further, by repeating the feeding to the reduction step for a plurality of times, high purity nickel powder having higher bulk density and a larger particle size can be produced.

Further, the resulting high purity nickel powder may be finished into the shape of briquettes that are coarser, not easily oxidized, and easily handled through the nickel powder briquetting step and briquette firing step as described below.

Furthermore, an ammonia recovery step may be provided.

### [Nickel Powder Briquetting Step]

The high purity nickel powder produced by the present invention is dried and then processed for shaping with a briquetting machine or the like to obtain nickel briquettes in a block form as a product form.

Further, in order to improve the processability to form the briquettes, a material that does not impair the product quality such as water may be added as a binder to the nickel powder depending on the case.

### [Briquette Sintering Step]

The nickel briquettes prepared in the briquetting step is subjected to roasting and sintering in a hydrogen atmosphere to prepare a briquette sintered compact. This treatment is performed for increasing the strength and removing ammonia and a sulfur component remaining in a very small amount, and the roasting and sintering temperature of the treatment is preferably 500 to 1200°C. If the temperature is lower than 500°C, the sintering will be insufficient, and even if the temperature exceeds 1200°C, the efficiency will hardly change but the loss of energy will increase.

### [Ammonium Sulfate Recovery Step]

The post-reduction solution produced by the solid-liquid separation step (4), in which the nickel powder is separated as a solid phase, after the reduction step (3) contains ammonium sulfate and ammonia.

Thus, the ammonium sulfate can be recovered as ammonium sulfate crystals by subjecting the post-reduction solution to the ammonium sulfate recovery step, in which the post-reaction solution is heated and concentrated to precipitate ammonium sulfate.

### [Ammonia Recovery Step]

Further, ammonia can be recovered by adding an alkali to the post-reduction solution to adjust the pH to 10 to 13 and then heating the resulting solution to volatilize ammonia gas.

The alkali used here suitably includes, but is not limited to, caustic soda and slaked lime, because they are industrially inexpensive.

Further, the recovered ammonia gas can produce aqueous ammonia by bringing it into contact with water, and the resulting aqueous ammonia can be repeatedly used in the process.

### Examples

The present invention will be described below in more detail using Examples.

### Example 1

To 1000 ml of a nickel sulfate solution with a nickel concentration of 120 g/L, was added 800 ml of slaked lime adjusted to have a slurry concentration of 200 g/L, so as to obtain 116 g of nickel hydroxide.

The nickel hydroxide was added together with 12.8 g of nickel powder having an average particle size of 2 µm as seed crystals to 1700 ml of a mixture of a nickel sulfate solution having a nickel concentration of 30 g/L and an ammonium sulfate solution having an ammonia concentration of 40 g/L, and then the mixture was stirred to prepare a mixture slurry.

The mixture slurry was heated to 185°C in an autoclave with stirring, and hydrogen gas was blown and fed into the slurry so that the pressure in the autoclave became 3.5 MPa to subject the mixture slurry to the reduction step. The reduced slurry was subjected to the solid-liquid separation step by filtration to recover nickel powder having grown particles.

At this time, the recovered nickel powder had an average particle size of 65 µm and the amount of the nickel powder recovered was 119 g.

Further, the recovered nickel powder was washed with pure water and then analyzed for the impurity content in the nickel powder.

The results are shown in Table 1. The mixing of Mg and Na into the nickel powder was not observed, and high purity Ni powder was able to be produced.

**[Table 1]**

| | Ni | Mg | Na |
|---|---|---|---|
| Example 1 | - | <0.005% | <0.005% |

### Example 2

To 1000 ml of a nickel sulfate solution having a nickel concentration of 120 g/L, was added 800 ml of slaked lime adjusted to have a slurry concentration of 200 g/L, to obtain 116 g of nickel hydroxide.

The 116 g of nickel hydroxide was mixed with a nickel ammine sulfate solution having a nickel concentration of 30 g/L, 232 ml of 25% aqueous ammonia and 225 g of ammonium sulfate, and then pure water was added to the mixture to prepare 1000 ml of a mixture slurry. 20 g of nickel powder having an average particle size of 1 µm was added as seed crystals to the solution, to prepare a mixture slurry.

Next, the prepared mixture slurry was heated to 120°C with stirring in an autoclave, and hydrogen gas was blown and fed into the slurry so that the pressure in the autoclave became 3.5 MPa to subject the slurry to nickel powder production treatment which is reduction treatment.

After the lapse of one hour from the start of feeding hydrogen gas, the feed of hydrogen gas was stopped, and the autoclave was cooled. A reduced slurry obtained after cooling was subjected to solid-liquid separation by filtration to recover high purity nickel powder having a small size. The nickel powder recovered at this time was 70 g.

Next, 116 g of nickel hydroxide was added to the post-reduction solution after the above solid-liquid separation, so as to prepare a slurry. To the slurry, was added the entire amount of the recovered high purity nickel powder having a small size to prepare a mixture slurry.

The mixture slurry was heated to 120°C with stirring in an autoclave, and hydrogen gas was blown and fed into the slurry so that the pressure in the autoclave became 3.5 MPa.

After the lapse of one hour from the start of feeding hydrogen gas, the feed of hydrogen gas was stopped, and the autoclave was cooled. A slurry obtained after cooling was subjected to solid-liquid separation by filtration to recover high purity nickel powder having grown particles.

### Example 3

The post-reduction solution obtained in the solid-liquid separation step of Example 1 was used for a part of an ammonia source to prepare a mixture slurry. The slurry was subjected to the reduction step under the same conditions as those in Example 1, and then subjected to the solid-liquid separation step, so as to recover nickel powder having grown particles. Nickel powder similar to that in Example 1 was recovered.

### Example 4

To a solution containing the nickel powder prepared under the same conditions as in Example 1, 336 g of nickel sulfate and 330 g of an ammonium sulfate concentration, was added 191 ml of 25% aqueous ammonia, and the total volume of the mixture was adjusted to 1000 ml. The resultant was subjected again to the reduction step and the solid-liquid separation step under the same conditions as in Example 1 to prepare nickel powder having grown particles. This operation was repeated 10 times using the prepared nickel powder to further grow particles of the nickel powder.

The recovered nickel powder had an average particle size of 111 µm, such that the particle size grew to a size 1.7 times the size of the nickel powder of Example 1.

The nickel powder obtained by the repeated operation had a sulfur content of 0.04%. Sodium and magnesium were at a minimum limit of determination or lower levels similar to Table 1 above.

Then, the obtained nickel powder was heated to 1000°C in a 2% hydrogen atmosphere and held for 60 minutes. Nickel powder obtained after the holding had a sulfur content of 0.008%, and the sulfur content could be further reduced by roasting.

### Example 5

To 1000 ml of a nickel ammine sulfate complex solution shown in Table 2, was added 75 g of nickel powder having an average particle size of 1 µm as seed crystals. Then, the resulting mixture was heated to 185°C with stirring in an autoclave, and hydrogen gas was blown and fed into the mixture so that the pressure in the autoclave became 3.5 MPa.

After the lapse of one hour from the start of feeding hydrogen gas, the feed of hydrogen gas was stopped, and the autoclave was cooled. A slurry obtained after cooling was subjected to solid-liquid separation by filtration to recover nickel powder, which was washed with pure water and then analyzed for the impurity content in the nickel powder.

The results are shown in Table 2.

The mixing of Mg and Na into the nickel powder was not observed, and high purity Ni powder was able to be produced.

**[Table 2]**

| | Ni | Mg | Na |
|---|---|---|---|
| Nickel ammine sulfate solution | 75 [g/L] | 0.1 [g/L] | 7.0 [g/L] |
| High purity nickel powder | - | <0.005% | <0.005% |

### Example 6

To a nickel ammine sulfate solution prepared by mixing 135 g of nickel sulfate hexahydrate, 191 ml of 25% aqueous ammonia, 169 g of ammonium sulfate and pure water, was added 75 g of nickel hydroxide. Pure water was added thereto so that the total volume of the solution was adjusted to 1000 ml. 15 g of nickel powder having an average particle size of 1 µm was added as seed crystals, to prepare a mixture slurry.

The mixture slurry was heated to 100°C with stirring in an autoclave, and hydrogen gas was fed into the mixture slurry so that the pressure in the autoclave became 3.5 MPa to subject the slurry to nickel powder production treatment.

After the lapse of one hour from the start of feeding hydrogen gas, the feed of hydrogen gas was stopped, and the autoclave was cooled. A reduced slurry obtained after cooling was subjected to solid-liquid separation by filtration to recover high purity nickel powder having a small size. The rate of nickel reduction was 58%.

### Example 7

With the use of the same mixture slurry as in Example 6, the same operation as in Example 6 was performed under conditions of the temperature of 100°C, and the pressure within an autoclave of 0.8 MPa. The resulting rate of nickel reduction was 56%.

### Example 8

With the use of the same mixture slurry as in Example 6, the same operation as in Example 6 was performed under conditions of the temperature of 120°C, and the pressure within an autoclave of 3.5 MPa. The resulting rate of nickel reduction was 74%.

### Example 9

With the use of the same mixture slurry as in Example 6, the same operation as in Example 6 was performed under conditions of the temperature of 120°C, and the pressure within an autoclave of 2.0 MPa. The resulting rate of nickel reduction was 74%.

### Example 10

With the use of the same mixture slurry as in Example 6, the same operation as in Example 6 was performed under conditions of the temperature of 120°C, and the pressure within an autoclave of 1.5 MPa. The resulting rate of nickel reduction was 74%.

As understood from the results of Examples 6 to 10 shown in Table 3, high purity nickel was produced in all examples, and the rates of reduction were not significantly affected by pressure and were significantly decreased due to decreases in temperature.

**[Table 3]**

| | Temperature [°C] | Pressure [MPa] | Rate of Ni reduction [%] |
|---|---|---|---|
| Example 6 | 100 | 3.5 | 58 |
| Example 7 | 100 | 0.8 | 56 |
| Example 8 | 120 | 3.5 | 74 |
| Example 9 | 120 | 2.0 | 74 |
| Example 10 | 120 | 1.5 | 74 |

### (Comparative example 1)

Nickel powder was prepared under the same conditions as in Example 1 except that the hydroxylation step in Example 1 was not performed, 191 ml of 25% aqueous ammonia was added to a nickel sulfate solution containing 75 g of nickel and a solution containing 330 g of ammonium sulfate, the solution was adjusted to have a total volume of 1000 ml, and then to the solution was added 7.5 g of nickel powder having an average particle size of 1 µm as seed crystals, so as to prepare a mixture slurry.

The recovered nickel powder was washed with pure water and then analyzed for the impurity content in the nickel powder.

The results are shown in Table 4. The mixing of Mg and Na into the nickel powder was at levels higher than those in Example 1. In addition, an average particle size and the amount of the nickel powder recovered were almost equivalent to those in Example 1.

**[Table 4]**

| | Ni | Mg | Na |
|---|---|---|---|
| Comparative example 1 | - | 0.02% | 0.02% |

### (Comparative example 2)

With the use of the same method as in the above Comparative Example 1, nickel powder was prepared without performing the hydroxylation step. The nickel powder was repeatedly subjected to the same method as in the above Example 3 for 10 times, to grow particles. The sulfur content in the nickel powder obtained by the repeated operation was 0.1%. Hence, high purity nickel powder equivalent to that having a sulfur content of 0.04% obtained in Example 3 of the present invention could not be obtained.

## Claims

1. A method of producing nickel powder from a nickel sulfate solution, comprising the process steps of:
(1) a hydroxylation step of adding an alkali to the nickel sulfate solution to produce a precipitate of nickel hydroxide;
(2) a complexing step of adding a post-reduction solution obtained in a solid-liquid separation step (4) and nickel powder as seed crystals to the precipitate of nickel hydroxide produced in the hydroxylation step (1), and dissolving the precipitate of nickel hydroxide, to form a mixture slurry containing a nickel ammine sulfate complex solution, seed crystals, and nickel hydroxide;
(3) a reduction step of blowing hydrogen gas into the mixture slurry formed in the complexing step (2) to form a reduced slurry containing nickel powder formed by precipitation of a nickel component in the mixture slurry on the seed crystals; and
(4) a solid-liquid separation step of
subjecting the reduced slurry formed in the reduction step (3) to solid-liquid separation to separately recover the nickel powder and a post-reduction solution,
repeatedly subjecting the recovered nickel powder to either or both of the complexing step (2) and the reduction step (3), and,
repeatedly subjecting the recovered post-reduction solution to the complexing step (2).

2. The method of producing nickel powder according to claim 1, wherein repeated operation of sieving the nickel powder recovered in the solid-liquid separation step (4) by particle size, and adding a nickel powder having particles smaller than a predetermined size as seed crystals to either or both of the complexing step (2) and the reduction step (3) provides a nickel powder coarser than the nickel powder of seed crystals.

3. The method of producing nickel powder according to claim 2, wherein seed crystals to be added to either or both of the complexing step (2) and the reduction step (3) have an average particle size of 0.1 to 100 µm.

4. The method of producing nickel powder according to any one of claims 1 to 3, wherein, in the complexing step (2), when the mixture slurry containing the nickel ammine sulfate complex solution, the seed crystals, and nickel hydroxide is formed, a dispersant is further added to the mixture slurry.

5. The method of producing nickel powder according to any one of claims 1 to 4, wherein, in the complexing step (2), an amount of the seed crystals added is 1 to 100% based on the weight of nickel in the nickel ammine sulfate complex solution.

6. The method of producing nickel powder according to any one of claims 1 to 5, wherein the reduced slurry is sieved, and undersize nickel powder and undersize reduced slurry of the resulting post-reduction solution are repeatedly used as parts of the nickel powder as seed crystals and the post-reduction solution in the complexing step (2).

7. The method of producing nickel powder according to claim 6, wherein the complexing step (2) is composed of two steps:
a dissolution step of adding the post-reduction solution to obtain the nickel ammine sulfate complex solution; and
a seed crystal addition step of adding the mixture slurry containing either nickel powder or nickel powder and the post-reduction solution.

8. The method of producing nickel powder according to claim 1, wherein the nickel sulfate solution is obtained by dissolving, in a sulfuric acid solution, at least one of nickel and cobalt mixed sulfide, nickel sulfide, crude nickel sulfate, nickel oxide, nickel hydroxide, nickel carbonate, and metallic nickel powder which is recovered by leaching a nickel oxide ore.

9. The method of producing nickel powder according to claim 1, wherein the nickel sulfate solution is obtained by:
a leaching step of dissolving a nickel-containing material having cobalt as an impurity; and
a solvent extraction step of adjusting pH of the leachate containing nickel and cobalt obtained in the leaching step and then separating the leachate into a nickel sulfate solution and a cobalt-recovering solution by solvent extraction.

10. The method of producing nickel powder according to claim 1, wherein a concentration of ammonium sulfate in the nickel ammine sulfate complex solution is 100 to 500 g/L, and an ammonium concentration is 1.9 or more in a molar ratio based on a nickel concentration in the nickel ammine sulfate complex solution.

11. The method of producing nickel powder according to claim 1, wherein, in the reduction step (3), hydrogen gas is blown while maintaining the temperature in the range of 100 to 200°C and the pressure in the range of 0.8 to 4.0 MPa.

12. The method of producing nickel powder according to claim 4, wherein the dispersant contains a polyacrylate salt.

13. The method of producing nickel powder according to claim 1, comprising:
a nickel powder briquetting step of processing the nickel powder obtained in the reduction step (3) into nickel briquettes in a block form using a briquetting machine; and
a briquette sintering step of subjecting the resulting nickel briquettes in the block form to sintering treatment under holding conditions at a temperature of 500 to 1200°C in a hydrogen atmosphere to form nickel briquettes as a sintered compact.

14. The method of producing nickel powder according to claim 1, comprising an ammonium sulfate recovery step of concentrating the post-reduction solution from the solid-liquid separation step (4) to crystallize ammonium sulfate and recovering ammonium sulfate crystals.

15. The method of producing nickel powder according to claim 1, comprising an ammonia recovery step of adding an alkali to the post-reduction solution from the solid-liquid separation step (4), heating the resulting mixture to volatilize ammonia gas and recovering the ammonia gas.
